# FASCICULE DE BREVET EUROPEEN

(11) **EP 1 209 077 B1**
(45) Date de publication et mention de la délivrance du brevet: **26.01.2005**
(21) Numéro de dépôt: 01403024.1
(22) Date de dépôt: 26.11.2001
(51) Int. Cl.: B64C 39/02, B64C 39/10

(54) **Dispositif d'accès a bord pour aéronef et aile volante équipée d'un tel dispositif**
Ein- und Aussteigvorrichtung eines Flugzeuges und Flügelflugzeug mit einer solchen Einrichtung
Aircraft passenger boarding device and flying wing equipped with this device

(30) Priorité: 28.11.2000 FR 0015320
(43) Date de publication de la demande: 29.05.2002
(73) Titulaire: AIRBUS FRANCE, 31060 Toulouse (FR)
(72) Inventeur: Depeige, Alain, 31170 Tournefeuille (FR); Jarrige, Jean-Luc, 31880 La Salvetat Saint Gilles (FR)
(74) Mandataire: Poulin, Gérard

(56) Documents cités:
- US-A- 2 547 811

## Description

### Domaine technique

L'invention concerne un dispositif d'accès à bord, conçu pour permettre à des passagers d'embarquer dans un aéronef et d'en débarquer en un temps aussi court que possible.

Un tel dispositif est principalement destiné à des aéronefs de très grande capacité, dans lesquels les temps d'embarquement et de débarquement sont particulièrement longs.

L'invention concerne également une aile volante équipée d'un tel dispositif d'accès à bord.

### Etat de la technique

Dans les aéronefs dédiés au transport commercial de passagers, l'accès à bord s'effectue par des portes latérales qui s'ouvrent directement dans le fuselage de l'avion.

Sur les aéronefs existants, il existe différents types de portes. Plus précisément, celles-ci sont classées selon leurs dimensions et le nombre de passagers qu'elles permettent d'évacuer simultanément en procédure d'urgence. Ainsi, sur des avions de grande capacité, les dimensions des portes et les caractéristiques des toboggans d'évacuation qui leur sont associés permettent d'évacuer les passagers deux par deux.

Si l'on considère les portes des avions existants du seul point de vue des opérations d'embarquement et de débarquement des passagers, leurs dimensions sont insuffisantes. En effet, les usagers constatent quotidiennement que ces opérations sont toujours longues et fastidieuses lors des escales. De plus, ces désagréments s'accentuent au fur et à mesure que le nombre de passagers transportés augmente.

Or, le nombre de passagers transportés dans les avions étudiés actuellement par les constructeurs aéronautiques est sensiblement plus grand que dans les avions existants. Ainsi, des avions de type "aile volante" pourront transporter environ 900 passagers, soit presque le double des avions de transport actuels de plus forte capacité.

L'utilisation de portes d'accès classiques pour embarquer et débarquer un tel nombre de passagers conduirait à des temps de transfert difficilement acceptables.

Le problème est encore accru si l'on considère l'évacuation des passagers en cas d'urgence. Sur les aéronefs destinés au transport des passagers, ceux-ci doivent pouvoir être évacués, au sol, dans des situations critiques telles que, par exemple, un atterrissage sur le ventre. L'évacuation des passagers doit alors être effectuée le plus rapidement possible, tout en évitant de provoquer des blessures telles que des brûlures, des foulures, etc..

Sur les aéronefs existants, l'évacuation au sol des passagers s'effectue latéralement, des deux côtés du fuselage, par les portes servant à l'embarquement et au débarquement des passagers et par des issues de secours donnant sur les ailes. Des toboggans d'évacuation de secours sont associés à ces différentes issues d'évacuation d'urgence, pour permettre une évacuation rapide des passagers lors d'un accident. Ces toboggans sont habituellement constitués par des structures gonflables stockées à l'état replié dans un emplacement prévu à cet effet à l'intérieur de l'avion.

Cette solution classique est illustrée notamment par le document US-A-4 512 539, qui concerne un dispositif permettant de déployer automatiquement un toboggan gonflable à travers une porte latérale d'accès à bord, lorsque cette porte est ouverte en situation d'urgence.

Le règlement des autorités de certification stipule que l'évacuation totale d'un aéronef doit être faite en 90 secondes. Cet intervalle de temps débute lorsque le signal d'évacuation (panneau lumineux, signal sonore, etc.) est émis et se termine à l'arrivée au sol des passagers et de l'équipage au complet. Il comprend donc l'ouverture des portes, le gonflage des toboggans, l'évacuation des passagers, la vérification par l'équipage que tous les passagers ont bien quitté l'appareil et l'évacuation de l'équipage. Ces différentes étapes sont d'autant plus difficiles à mettre en oeuvre dans le temps imparti qu'il faut tenir compte du temps d'hésitation inévitable des passagers devant les toboggans et du caractère généralement coudé du trajet suivi par les passagers pour atteindre les issues de secours.

Sur les avions existants, l'utilisation de portes de grandes dimensions et de toboggans adaptés permet à deux passagers de taille moyenne d'être évacués de front. Cela autorise une évacuation totale de l'avion dans le délai de 90 secondes imposé par le règlement des autorités de certification

Toutefois, l'utilisation de portes de ce type sur un aéronef susceptible de transporter deux fois plus de passagers qu'un avion existant ne permettrait pas d'évacuer tous les passagers dans le délai prescrit sans multiplier le nombre des issues.

De plus, dans le cas particulier d'un avion sans fuselage tel qu'une aile volante, les solutions utilisées habituellement ne sont pas directement applicables. Ainsi, par exemple, on ne peut pas transposer à un tel avion les issues de secours situées au-dessus de la voilure sur un avion classique, puisqu'il n'existe pas de jonction fuselage-voilure sur un avion sans fuselage.

Sur les avions de type "aile volante" actuellement à l'étude, on envisage d'implanter un nombre important de portes d'accès à bord sur les parties extrêmes avant de l'aéronef, pour assurer à la fois l'embarquement, le débarquement et l'évacuation d'urgence des passagers. Cependant, cette solution n'est pas totalement satisfaisante. En effet, un atterrissage dans un milieu non sécurisé (forêt, etc.) entraînerait des dégradations structurales qui risquent de provoquer le blocage des issues de secours.

Une autre solution connue consiste à utiliser une capsule de sauvetage fermée pour ramener en toute sécurité, sur terre ou sur mer, les passagers d'un aéronef en détresse.

Une solution de ce type est décrite dans le document FR-A-1 603 439. Dans ce cas, la capsule comprend le poste de pilotage, le compartiment des passagers et la soute à bagages. Lorsque la situation le nécessite, la capsule se détache d'elle-même pour être libérée des moteurs, des ailes et de la dérive. Des parachutes s'ouvrent lors de l'éjection, pour réduire la vitesse de la capsule.

Toutefois, ces capsules de sauvetage ont un poids particulièrement élevé, ce qui rend difficilement imaginable leur utilisation dans des avions de transport de passagers. Ce genre de capsule n'est d'ailleurs utilisé sur aucun avion existant.

Le document US-A-4 699 336 envisage également l'utilisation d'une capsule de survie éjectable. Lorsque la situation le nécessite, la capsule est éjectée vers l'arrière de l'appareil, après que la queue de l'avion a été elle-même éjectée. Dans ce cas, la capsule ne contient que le compartiment des passagers. Comme dans le document précédent, des parachutes permettent de ralentir la chute de la capsule afin qu'elle ne s'écrase pas sur le sol. Pour la même raison que dans le cas de la capsule décrite dans le document FR-A-1 603 439, cette solution n'est pas réellement utilisable dans la pratique sur un avion de transport de passagers.

### Exposé de l'invention

L'invention a précisément pour objet un dispositif assurant l'accès à bord d'un aéronef, le débarquement et l'évacuation d'urgence des passagers dans les conditions requises par la réglementation en vigueur, y compris pour des aéronefs de très grande capacité, notamment de type "aile volante".

Conformément à l'invention, ce résultat est obtenu au moyen d'un dispositif d'accès à bord, pour une aile volante comprenant un compartiment passagers délimité par un carénage aérodynamique de l'aile volante, le dispositif étant caractérisé en ce qu'il comprend au moins un tunnel rapporté à l'extérieur dudit carénage aérodynamique, fixé sur un bord de fuite de celui-ci et orienté vers l'arrière selon une direction sensiblement parallèle à un axe longitudinal de l'aile volante, et une porte fermant normalement la communication entre le compartiment passagers et le tunnel.

En utilisant un ou, de préférence, plusieurs tunnels de ce type, prolongeant horizontalement vers l'arrière le carénage aérodynamique de l'aile volante, il devient possible d'embarquer et de débarquer simultanément un nombre important de passagers. Dans les situations d'urgence, ces mêmes tunnels autorisent une évacuation très rapide des passagers jusqu'au sol, en toute sécurité.

L'invention est particulièrement adaptée à une aile volante. En effet, il est alors possible d'implanter côte à côte plusieurs tunnels, de façon à permettre une diminution sensible des temps d'embarquement et de débarquement ainsi qu'une évacuation très rapide des passagers en cas d'urgence.

Ainsi, dans ce cas, plusieurs tunnels sont avantageusement placés entre des élevons consécutifs, articulés sur le bord de fuite du carénage aérodynamique de l'aile volante.

Afin d'améliorer encore la fluidité lors de l'embarquement, du débarquement et de l'évacuation d'urgence des passagers, on place avantageusement chaque tunnel sensiblement dans le prolongement d'un couloir formé entre les sièges, dans le compartiment passagers de l'aéronef.

Dans la pratique, chaque tunnel comprend avantageusement au moins une partie arrière détachable, apte à être éjectée dans des conditions accidentelles.

De préférence, la partie arrière détachable est alors articulée sur le carénage aérodynamique de l'aéronef, de façon à pouvoir pivoter sur un côté, à la manière d'une porte, pour permettre l'embarquement et le débarquement des passagers.

Selon un agencement particulièrement favorable à l'écoulement aérodynamique, la partie arrière détachable de chaque tunnel est profilée sensiblement en forme de cône.

Conformément à un premier mode de réalisation de l'invention, un toboggan d'évacuation gonflable est prévu dans chaque tunnel, à l'arrière d'un tronçon fixe sur lequel est montée la partie arrière détachable.

Selon un deuxième mode de réalisation de l'invention, un tronçon fixe de chaque tunnel, sur lequel est montée la partie arrière détachable, comprend un plancher articulé à proximité du seuil de la porte. Ce plancher est alors apte à basculer vers le bas pour former un toboggan d'évacuation d'urgence des passagers.

Dans ce cas, le plancher articulé est, de préférence, équipé de marches, par exemple escamotables, pour l'embarquement et le débarquement des passagers.

L'invention a également pour objet une aile volante équipée d'un dispositif d'accès à bord tel que défini ci-dessus.

### Brève description des dessins

On décrira à présent, à titre d'exemples non limitatifs, différents modes de réalisation de l'invention, en se référant aux dessins annexés, dans lesquels :
- la figure 1 est une vue en perspective qui représente schématiquement une aile volante équipée de tunnels d'accès à bord conformes à l'invention ;
- la figure 2 est une vue de dessus, partiellement en coupe, qui représente à plus grande échelle l'un des tunnels de l'aile volante illustrée sur la figure 1 ;
- la figure 3 est une vue en perspective illustrant un premier mode de réalisation de l'invention, dans lequel chaque tunnel est équipé d'un toboggan d'évacuation gonflable ;
- la figure 4 est une vue en perspective comparable à la figure 3, illustrant un deuxième mode de réalisation de l'invention, dans lequel l'évacuation d'urgence des passagers s'effectue par un plancher articulé prévu dans chaque tunnel ; et
- la figure 5 est une vue en perspective représentant à plus grande échelle l'un des tunnels, équipé d'un plancher articulé, selon le deuxième mode de réalisation de l'invention.

### Description détaillée de deux modes de réalisation préférés de l'invention

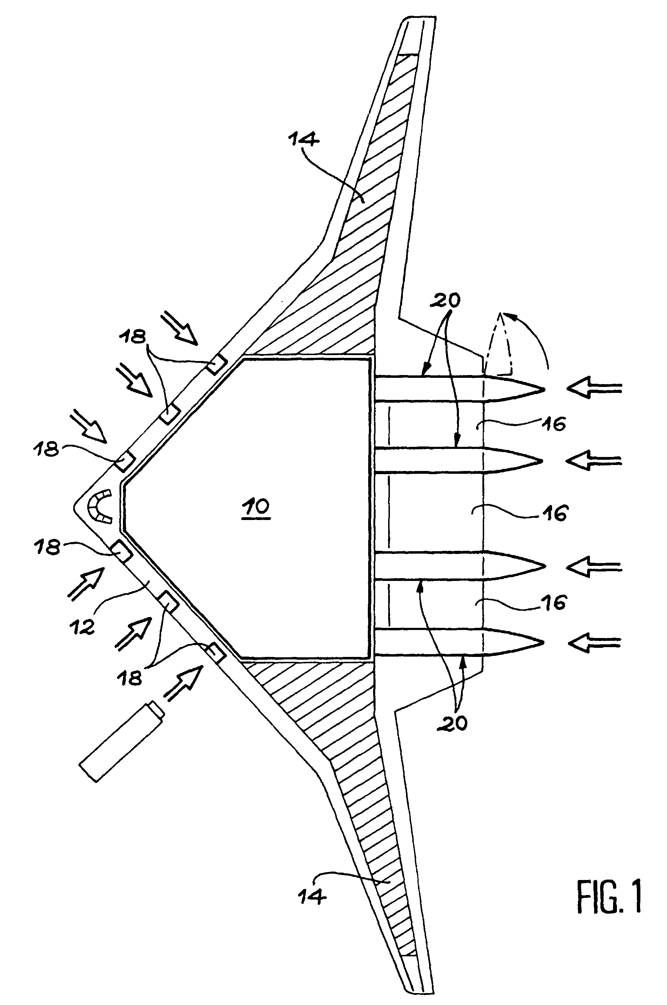

Sur la figure 1, on a représenté très schématiquement une aile volante de grande capacité, destinée au transport commercial de passagers.

Toute la partie centrale de l'aile volante forme un compartiment passagers 10. Selon la configuration, le compartiment passagers 10 peut recevoir jusqu'à environ 900 personnes. Ce compartiment est pressurisé et délimité principalement par le carénage aérodynamique 12 formant l'enveloppe extérieure de l'aéronef. Les deux parties latérales de l'aile volante forment des caissons 14 dans lesquels sont notamment implantés les réservoirs de carburant.

Pour permettre le pilotage de l'aile volante, des élevons 16 sont articulés sur le bord de fuite du carénage aérodynamique 12, autour d'un même axe orienté selon une direction horizontale, transversalement par rapport à l'aéronef.

Selon un agencement connu, des portes 18 sont prévues sur le bord d'attaque du carénage aérodynamique 12. Ces portes 18 sont principalement destinées à assurer l'embarquement et le débarquement des passagers. Elles peuvent aussi être utilisées, le cas échéant, pour assurer l'évacuation d'urgence des passagers, si elles ne sont pas bloquées par des obstacles extérieurs tels que des arbres.

Conformément à l'invention, l'aile volante illustrée sur la figure 1 est équipée de dispositifs d'accès supplémentaires, implantés à l'arrière du compartiment passagers 10.

Ces dispositifs d'accès comprennent des tunnels 20, qui sont rapportés à l'extérieur du carénage aérodynamique 12, ainsi que des portes 22, interposées entre le compartiment passagers 10 et chacun des tunnels 20. Dans le mode de réalisation illustré à titre d'exemple sur la figure 1, quatre tunnels sont rapportés sur le bord de fuite du carénage aérodynamique 12. Toutefois, on comprendra aisément que le nombre de tunnels peut être différent, sans sortir du cadre de l'invention. De façon générale, on adapte le nombre de tunnels 20 au nombre des passagers à embarquer sur l'aéronef.

Les tunnels 20 sont droits et s'étendent vers l'arrière selon une direction sensiblement parallèle à l'axe longitudinal de l'aile volante, c'est-à-dire selon une direction sensiblement horizontale.

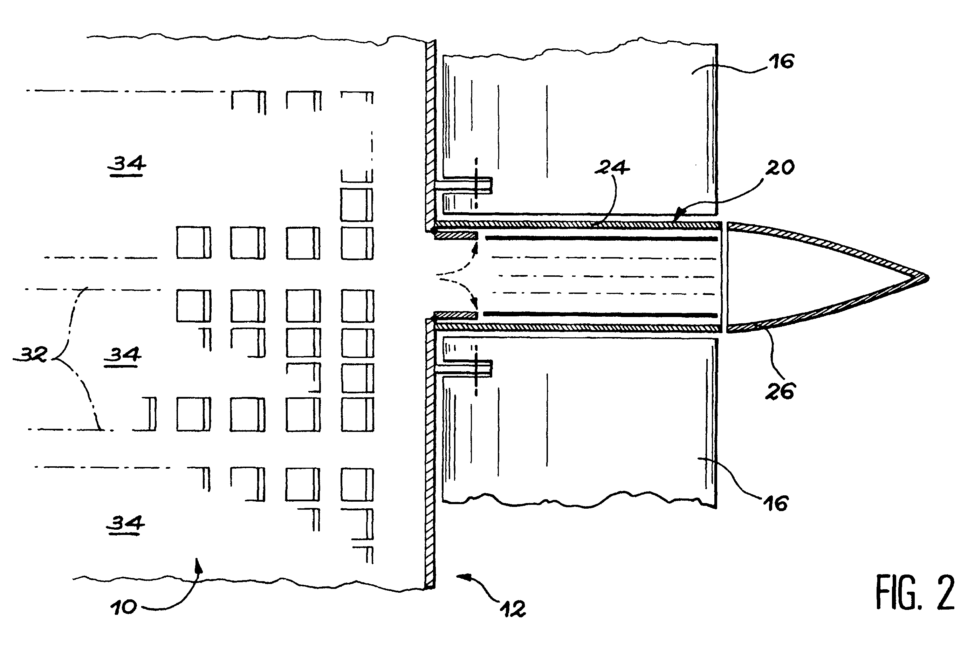

De façon plus précise et comme l'illustre la figure 2, chaque tunnel 20 comprend un tronçon avant fixe 24 et une partie arrière détachable 26.

Le tronçon avant fixe 24 présente, de préférence, une section intérieure sensiblement uniforme et dépourvue de discontinuités, pour permettre un flux de passagers aussi important que possible. Cette section intérieure, généralement rectangulaire, peut notamment être dimensionnée pour autoriser le passage simultané d'au moins trois à quatre personnes de front. Cet agencement est facilité, dans le cas d'une aile volante, par le fait que le bord de fuite du carénage aérodynamique 12 est très large.

L'extrémité avant du tronçon avant fixe 24 est solidarisé du bord de fuite du carénage aérodynamique 12, matérialisant la paroi arrière du compartiment passagers 10. On utilise à cet effet des moyens de fixation classiques de type boulons, rivets, soudure, colle, etc..

La porte 22, qui peut être simple ou double, comme représenté à titre d'exemple sur la figure 2, occupe pratiquement toute la section intérieure du tronçon 24, pour ne pas réduire les dimensions du passage disponible pour les passagers. La porte 22 est située dans le prolongement de la paroi arrière du compartiment passagers 10, ou à proximité de cette paroi. Lorsqu'elle est fermée, elle isole totalement le compartiment passager, pressurisé, de l'intérieur du tunnel, non pressurisé. La porte 22 est conçue suivant les normes des issues des aéronefs traditionnels, notamment en ce qui concerne la tenue en pression. Comme on l'a représenté sur la figure 2, la porte 22 s'ouvre de préférence vers l'intérieur du tunnel 20, pour faciliter l'évacuation d'urgence des passagers.

La partie arrière détachable 26 est avantageusement profilée en forme de cône, pour ne pas perturber l'écoulement aérodynamique de l'air. Cette partie arrière 26 est montée à l'extrémité arrière du tronçon fixe 24, de façon telle qu'elle ferme normalement le tunnel 20 lorsque l'aile volante est en vol.

Plus précisément, la partie arrière 26 est articulée sur l'extrémité arrière du tronçon fixe 24 par une charnière (non représentée), à la manière d'une porte, de façon à pouvoir s'ouvrir sur le côté, comme on l'a représenté schématiquement sur la figure 1. En variante, la partie arrière 26 peut aussi s'ouvrir vers le bas, vers le haut ou en crocodile (en étant scindée en deux parties). Des dispositifs d'aide à l'ouverture tels que pistons, engrenages, etc. peuvent être utilisés. Cette configuration autorise l'utilisation des tunnels 20 pour l'embarquement et le débarquement des passagers.

En outre, la partie arrière 26 de chacun des tunnels 20 est montée à l'extrémité arrière du tronçon fixe 24 par des moyens de fixation (non représentés) qui permettent le largage immédiat de cette partie arrière lorsqu'une évacuation d'urgence des passagers doit être déclenchée. Le largage des parties arrière détachables 26 peut être déclenché soit depuis l'intérieur de l'aéronef, par exemple par l'équipage ou le personnel de bord, soit depuis l'extérieur de l'aéronef par des équipes de secours, soit encore de manière automatique, sous l'effet d'un choc de forte amplitude.

Lorsque la partie arrière 26 de chacun des tunnels 20 est ouverte à la manière d'une porte pour permettre l'embarquement et le débarquement des passagers, l'extrémité arrière du tronçon fixe 24 est raccordée à une passerelle d'accès (non représentée) d'un aéroport ou à un véhicule de transfert au sol (non représenté). Dans tous les cas, la largeur de la passerelle ou du véhicule est avantageusement adaptée à celle du tunnel, de façon à profiter au mieux des possibilités de passage simultané d'au moins trois ou quatre personnes offertes par le tunnel.

Lorsque la partie arrière 26 de chacun des tunnels 20 est détachée du tronçon fixe 24, pour permettre l'évacuation d'urgence des passagers, deux modes de réalisation différents peuvent être mis en oeuvre.

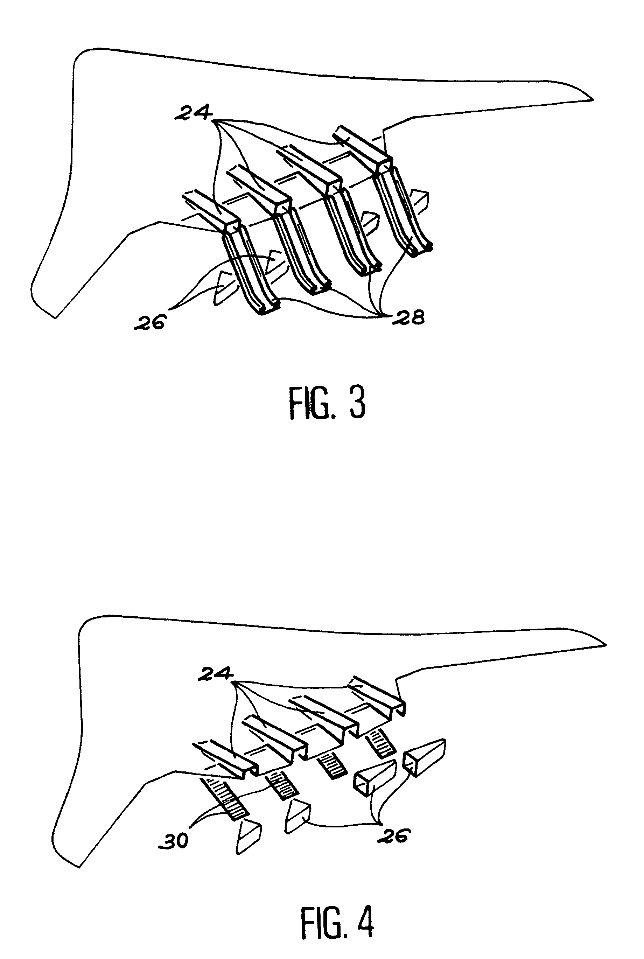

Selon un premier mode de réalisation, illustré sur la figure 3, un toboggan gonflable 28 est intégré dans le tronçon fixe 24, à l'extrémité arrière de celui-ci et au niveau du seuil de l'ouverture formée après l'éjection de la partie arrière 26. Dès que cette partie 26 est larguée, le toboggan 28 se gonfle et forme une rampe sur laquelle les passagers peuvent descendre jusqu'au sol en toute sécurité. La largeur du toboggan 28 est identique à celle du tunnel 20, c'est-à-dire qu'elle autorise l'évacuation simultanée d'au moins trois ou quatre personnes. Le montage du toboggan 28 dans le tunnel 20 peut être réalisé de la même manière que sur les aéronefs existants.

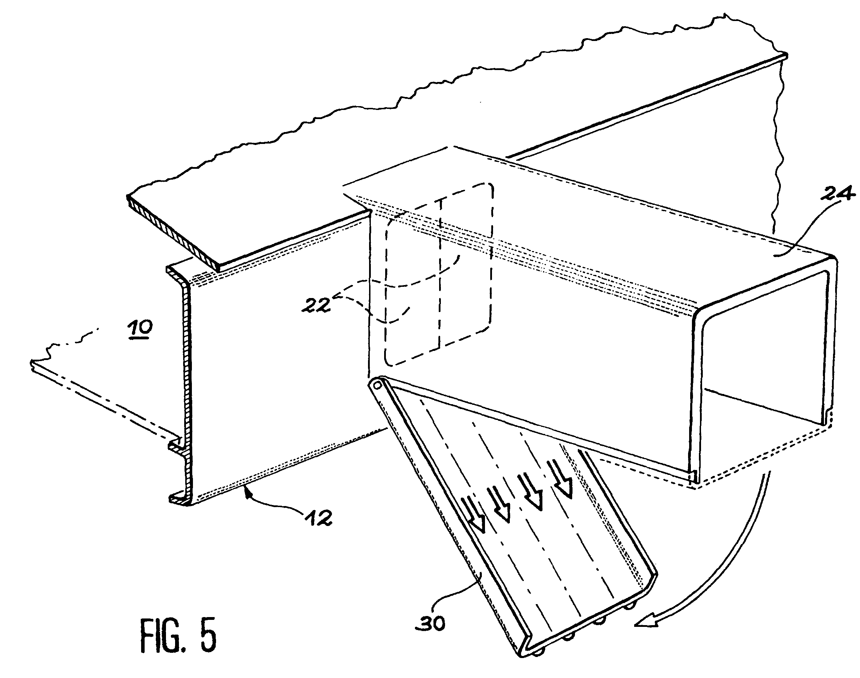

Dans un deuxième mode de réalisation de l'invention illustré sur les figures 4 et 5, le toboggan d'évacuation d'urgence est supprimé et remplacé par un plancher articulé 30 formant le fond du tronçon fixe 24 de chacun des tunnels 20.

Plus précisément, le plancher 30 du tronçon fixe 24 est articulé à proximité du seuil de la porte 22, autour d'un axe orienté selon une direction transversale et sensiblement horizontale.

Lorsque l'aéronef est en vol, des organes de verrouillage (non représentés) maintiennent le plancher 30 solidaire du tronçon fixe 24. Dans des conditions nécessitant une évacuation d'urgence des passagers, ces organes de verrouillage sont libérés et le plancher 30 pivote vers le bas de telle sorte que son extrémité arrière vient en appui sur le sol. Comme précédemment, au moins trois ou quatre passagers peuvent alors être évacués de front. La libération des organes de verrouillage peut être commandée par des moyens comparables à ceux qui assurent le largage de la partie arrière 26. Pour faciliter la descente des passagers et leur éviter de tomber sur le côté, le plancher peut comporter des rebords latéraux, une main courante ou une rambarde.

Dans ce deuxième mode de réalisation de l'invention, l'embarquement et le débarquement des passagers peuvent être réalisés de la même manière que précédemment, c'est-à-dire par l'extrémité arrière du tronçon fixe 24, après que la partie arrière 26 a pivoté sur le côté autour de sa charnière.

En variante, l'embarquement et le débarquement des passagers peuvent aussi être effectués en utilisant le plancher articulé 30. A cet effet, celui-ci est alors équipé de marches escamotables permettant aux passagers de monter et de descendre à au moins trois ou quatre personnes de front.
Comme on l'a représenté en particulier sur la figure 2, chacun des tunnels 20 est placé avantageusement sensiblement dans le prolongement de l'un des couloirs 32 qui sont prévus entre les rangées de sièges 34, dans le compartiment passagers 10, selon l'axe longitudinal de l'aile volante. Cet agencement contribue à améliorer le flux des passagers, aussi bien dans les conditions normales d'embarquement et de débarquement que dans des conditions d'évacuation d'urgence.

Comme l'illustrent les différentes figures, les tunnels 20 sont implantés sur le bord de fuite du carénage aérodynamique 12 de l'aile volante d'une façon telle que chacun d'entre eux sépare deux élevons 16 adjacents. Les tunnels 20 contribuent ainsi à guider le flux aérodynamique jusqu'aux bords de fuite des élevons Afin de ne pas perturber l'écoulement aérodynamique à ce niveau, la largeur extérieure des tunnels est sensiblement constante jusqu'aux bords de fuite des élevons. Pour la même raison, la forme extérieure des tunnels est carénée, dans la continuité de la forme de l'aéronef, pour éviter toute discontinuité aérodynamique susceptible de perturber l'écoulement de l'air.

Par ailleurs, les éléments de structure utilisés pour réaliser les différentes parties du tunnel sont formés en mettant en oeuvre les techniques connues de l'homme du métier, afin de pouvoir supporter les différentes contraintes mécaniques qui leur sont appliquées. A cet effet, on utilisera par exemple des matériaux sandwich, à âme en nid d'abeilles, pour réaliser le plancher, articulé ou non, du tunnel.

Bien entendu, l'invention n'est pas limitée aux modes de réalisation qui viennent d'être décrits à titre d'exemple. Ainsi, on comprendra que, si l'invention est particulièrement adaptée au cas d'une aile volante, elle peut aussi s'appliquer à d'autres types d'aéronefs plus classiques, notamment lorsqu'ils sont de très grande capacité.

Par ailleurs, le ou les tunnels peuvent éventuellement être équipés d'au moins une porte d'accès latéral pour l'embarquement et le débarquement des passagers, lorsque les équipements de certains aéroports le justifient.

En outre, la forme du tunnel et celle de sa partie arrière peuvent être sensiblement différentes de celles qui ont été décrites. Il en est de même pour le nombre des tunnels et pour le nombre de passagers susceptibles d'embarquer ou de débarquer de front.

Enfin, il est important d'observer que si l'invention est particulièrement adaptée à un aéronef destiné au transport de passagers, elle peut aussi s'appliquer à un aéronef servant au transport de matériel ou de fret. Dans ce cas, le chargement et le déchargement du fret bénéficient des même avantages que celui des passagers dans les modes de réalisation décrits.

## Revendications

1. Aile volante comprenant un dispositif d'accès à bord, ladite aile volante comprenant un compartiment passagers (10) délimité par un carénage aérodynamique (12) de l'aile volante, **caractérisé en ce qu'**elle comprend au moins un tunnel (20) rapporté à l'extérieur dudit carénage aérodynamique (12), fixé sur un bord de fuite de celui-ci et orienté vers l'arrière selon une direction sensiblement parallèle à un axe longitudinal de l'aile volante, et une porte (22) fermant normalement la communication entre le compartiment passagers (10) et le tunnel (20).

2. Aile volante selon la revendication 1, dans lequel plusieurs tunnels (20) sont placés entre des élevons (16) consécutifs articulés sur le bord de fuite du carénage aérodynamique (12) de l'aile volante.

3. Aile volante selon l'une quelconque des revendications 1 et 2, dans lequel chaque tunnel (20) est placé sensiblement dans le prolongement d'un couloir (32) formé entre des sièges (34), dans le compartiment passagers (10) de l'aile volante.

4. Aile volante selon l'une quelconque des revendications 1 à 3, dans lequel chaque tunnel (20) comprend au moins une partie arrière détachable (26), apte à être éjectée dans des conditions accidentelles.

5. Aile volante selon la revendication 4, dans lequel la partie arrière détachable (26) est articulée sur un tronçon avant fixe (24) du tunnel (20), de façon à pouvoir pivoter sur un côté, à la manière d'une porte, pour permettre l'embarquement et le débarquement des passagers.

6. Aile volante selon l'une quelconque des revendications 4 et 5, dans lequel la partie arrière détachable (26) de chaque tunnel (20) est profilée sensiblement en forme de cône.

7. Aile volante selon l'une quelconque des revendications 4 à 6, dans lequel un toboggan d'évacuation gonflable (28) est prévu dans chaque tunnel (20), à l'arrière d'un tronçon avant fixe (24) sur lequel est montée la partie arrière détachable (26).

8. Aile volante selon l'une quelconque des revendications 4 à 6, dans lequel un tronçon avant fixe (24) de chaque tunnel (20), sur lequel est montée la partie arrière détachable (26), comprend un plancher articulé (30) à proximité du seuil de la porte (22), ledit plancher étant apte à basculer vers le bas pour former un toboggan d'évacuation d'urgence des passagers.

9. Aile volante selon la revendication 9, dans lequel le plancher articulé (30) est équipé de marches, pour l'embarquement et le débarquement des passagers.

## Claims

1. Flying wing comprising a boarding access device, including a passenger compartment (10) delimited by the aerodynamic shell (12) of the flying wing, **characterized in that** it comprises at least one tunnel (20) mounted on the outside of the said aerodynamic shell (12), attached to the trailing edge of the latter and orientated rearwards and in a direction approximately parallel to the flying wing longitudinal axis, and a door (22) normally closing off the opening between the passenger compartment (10) and the tunnel (20).

2. Flying wing in accordance with claim 1, in which several tunnels (20) are located between adjacent elevons (16) articulated from the trailing edge of the aerodynamic shell (12) of the flying wing.

3. Flying wing in accordance with either of claims 1 and 2, in which each tunnel (20) is located approximately in-line with the aisle (32) formed between the seat rows (34) in the aircraft passenger compartment (10).

4. Flying wing in accordance with any of claims 1 to 3, in which each tunnel (20) incorporates at least one rear detachable section (26), which can be jettisoned in emergency conditions.

5. Flying wing in accordance with claim 4, in which the rear detachable section (26) is articulated from a fixed front section (24) of the tunnel (20), in order to be able to pivot to one side, like a door, to enable passengers to embark and disembark.

6. Flying wing in accordance with either of claims 4 and 5, in which the rear detachable part (26) of each tunnel (20) is shaped approximately like a cone.

7. Flying wing in accordance with any of claims 4 to 6, in which an inflatable escape slide (28) is fitted in each tunnel (20), at the rear of the fixed front section (24) on which the rear detachable section (26) is mounted.

8. Flying wing in accordance with any of claims 4 to 6, in which a fixed front section (24) of each tunnel (20), to which the rear detachable section is mounted, incorporates an articulated floor (30) close to the threshold of the door (22), the said floor being able to hinge downwards to form an escape slide for the emergency evacuation of passengers.

9. Flying wing in accordance with claim 8, in which the articulated floor (30) is fitted with steps, for embarking and disembarking passengers.

## Patentansprüche

1. Flügelflugzeug mit einer Ein- und Aussteigevorrichtung, wobei dieses Flügelflugzeug einen von einer aerodynamischen Verkleidung (12) des Flügelflugzeugs begrenzten Fluggastraum (10) umfasst,
**dadurch gekennzeichnet, dass** es wenigstens einen an der Außenseite der aerodynamischen Verkleidung (12) angesetzten Tunnel (20), der an einer Hinterkante derselben befestigt und nach hinten in einer zu einer Längsachse des Flügelflugzeugs im Wesentlichen parallelen Richtung ausgerichtet ist, und eine Tür (22) umfasst, die normalerweise die Verbindung zwischen dem Fluggastraum (10) und dem Tunnel (20) verschließt.

2. Flügelflugzeug nach Anspruch 1,
bei dem mehrere Tunnel (20) zwischen aufeinander folgenden, an der Hinterkante der aerodynamischen Verkleidung (12) des Flügelflugzeugs angelenkten Elevons (16) angeordnet sind.

3. Flügelflugzeug nach einem der Ansprüche 1 oder 2,
bei dem jeder Tunnel (20) im Wesentlichen in der Verlängerung eines zwischen Sitzen (34) gebildeten Ganges (32) im Fluggastraum (10) des Flügelflugzeugs angeordnet ist.

4. Flügelflugzeug nach einem der Ansprüche 1 bis 3,
bei dem jeder Tunnel (20) wenigstens einen abnehmbaren hinteren Teil (26) umfasst, der in Unfallsituationen abgeworfen werden kann.

5. Flügelflugzeug nach Anspruch 4,
bei dem der abnehmbare hintere Teil (26) an einem feststehenden vorderen Abschnitt (24) des Tunnels (20) in der Weise angelenkt ist, dass er wie eine Tür auf eine Seite geschwenkt werden kann, um den Ein- und Ausstieg der Fluggäste zu ermöglichen.

6. Flügelflugzeug nach einem der Ansprüche 4 oder 5,
bei dem der abnehmbare hintere Teil (26) jedes Tunnels (20) ein im Wesentlichen kegelförmiges Profil aufweist.

7. Flügelflugzeug nach einem der Ansprüche 4 bis 6,
bei dem in jedem Tunnel (20) an der Rückseite eines feststehenden vorderen Abschnitts (24), an dem der abnehmbare hintere Teil (26) angebracht ist, eine aufblasbare Notrutsche (28) vorgesehen ist.

8. Flügelflugzeug nach einem der Ansprüche 4 bis 6,
bei dem ein feststehender vorderer Abschnitt (24) jedes Tunnels (20), an dem der abnehmbare hintere Teil (26) angebracht ist, einen in der Nähe der Schwelle der Tür (22) angelenkten Fußboden (30) umfasst, der nach unten gekippt zu werden vermag, um eine Notrutsche für die Evakuierung der Fluggäste zu bilden.

9. Flügelflugzeug nach Anspruch 8,
bei dem der angelenkte Fußboden (30) mit Stufen für den Ein- und Ausstieg der Fluggäste ausgestattet ist.
